# EUROPEAN PATENT APPLICATION

(11) **EP 1 698 678 A1**
(43) Date of publication of application: **06.09.2006**
(21) Application number: 03786336.2
(22) Date of filing: 25.12.2003
(51) Int. Cl.: C09K 5/10

(54) **HEAT CARRIER COMPOSITION**

(71) Applicant: Shishiai-Kabushikigaisha, Seki-shi, Gifu 501-3923 (JP)
(72) Inventor: EGAWA, Hiroshi; c/o SHISHIAI-KABUSHIKIGAISHA, Seki-shi, Gifu 501-3923 (JP); ITO, Naoshi; c/o SHISHIAI-KABUSHIKIGAISHA, Seki-shi, Gifu 501-3923 (JP)
(74) Representative: Ratcliffe, Susan Margaret
(86) International application number: PCT/JP2003/016821
(87) International publication number: WO 2005/063918

(57) **Abstract**

The present invention relates to a heat transfer medium composition which contains water, a glycol, alcohol and/or glycol ether as a main ingredient and a pH buffering agent. The composition provides improved and long lasting buffering in actual use to maintain the pH value of the medium within the appropriate range of pH 6 to pH 10. The pH buffering agent is prepared of an alicyclic compound where two members selected from among carboxyl and its salts are bonded to a ring-constituting carbon atom, or at least two members selected from the group are respectively bonded to as many neighboring carbon atoms. Alternatively, the pH buffering agent is prepared of a heterocyclic compound in which at least one ring-constituting carbon atom of the alicyclic compound is substituted by a nitrogen or oxygen atom, where two members selected from the group are bonded to a ring-constituting carbon atom, or at least two members selected from the group are respectively bonded to as many neighboring carbon atoms.

## Description

### Technical Field

The present invention relates to a heat transfer medium composition used mainly in cooling systems for internal combustion engines, solar systems, floor heating systems or air conditioners. In particular, this invention relates to a heat transfer medium composition which provides long-lasting buffering in actual use.

### Background Art

A heat transfer medium composition comprising a glycol or an alcohol as a main ingredient and a variety of corrosion inhibitors is used in cooling systems for internal combustion engines, solar systems, floor heating systems or air conditioners.

There was introduced a heat transfer medium composition for use in cooling systems for internal combustion engines which contains a glycol as a main ingredient, and an alkyl benzoic acid or its alkali metal salt, ammonium salt or amine salt, an aliphatic monobasic acid of C8 to C12 or its alkali metal salt, ammonium salt or amine salt, and a hydrocarbon triazole (see Japanese Examined Patent Publication H4-42477).

In such heat transfer mediums, glycols or alcohols are gradually oxidized by contact with oxygen during use under a working condition of elevated temperatures and pressures, and produce acids such as glycolic acid.

Oxidation of glycols and/or alcohols, progresses over time, and the pH values of the heat transfer mediums gradually fall from the appropriate use range of pH 6 to pH 10.

As a result, metal components of cooling systems, solar systems, floor heating systems and air conditioners, such as aluminum, aluminum alloys, cast iron, steel, brass, solder and copper, dissolve and corrode despite the presence of corrosion inhibitors.

Tiny holes are generatcd in radiator tubes as a result of metal dissolution and corrosion. In addition, crevice corrosion takes place at cylinder head joints as well as at cooling hose connections. Such corrosion will eventually result in loss of coolant, overheating and damage of components.

In addition, metals such as aluminum, aluminum alloys, cast iron, steel, brass, solder and copper, which are components of cooling systems for combustion engines, solar systems, floor heating systems and air conditioners, gradually dissolve as metallic ions in the heat transfer mediums over timc. The dissolved metallic ions bond with the corrosion inhibitors contained in the heat transfer mediums, and produce precipitate. As a result, effective corrosion inhibitors in the heat transfer mediums are reduced, and the pH values of the heat transfer mediums become inadequate, which promotes metal corrosion.

### Disclosure of the Invention

Accordingly, an object of the present invention is to provide a heat transfer medium composition which provides excellent and long lasting buffering so as to maintain the pH value of the heat transfer medium within the appropriate use range of pH 6 to pH 10.

A heat transfer medium composition according to the present invention comprises water, a glycol, alcohol or glycol ether as a main ingredient.

The glycol which may be advantageously used for the heat transfer medium composition of the present invention may be selected from among ethylene glycol, diethylene glycol, triethylene glycol, propylene glycol, 1,3-propanediol, 1,3-butanediol, 1,5-pentanediol, hexylene glycol and their mixtures.

The alcohol which may be advantageously used for the heat transfer medium composition of the present invention may be selected from among methanol, ethanol, propanol, butanol, pentanol, hexanol, heptanol octanol and their mixtures.

The glycol ether which may be advantageously used for the heat transfer medium composition of the present invention may be selected from among ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether and tetraethylene glycol monobutyl ether, and their mixtures.

The heat transfer medium composition of the present invention contains a pH buffering agent, which comprises an alicyclic compound where two members selected from the group consisting of carboxyl and its salts are bonded to a ring-constituting carbon atom, or at least two members selected from said group are respectively bonded to as many neighboring carbon atoms, or the heat transfer medium composition contains a pH buffering agent which comprises a heterocyclic compound in which at least one ring-constituting carbon atom of the alicyclic compound is substituted by a nitrogen or oxygen atom, where two members selected from said group are bonded to a ring-constituting carbon atom, or at least two members selected from said group are respectively bonded to as many neighboring carbon atoms.

These pH buffering agents effectively prevent the pH value of the heat transfer medium from going out of the appropriate use range of pH 6 to pH 10 (initially obtained by adjustment with a pH adjuster such as potassium hydroxide) in order to prevent oxidation of the glycol and dissolving of metallic ions from cooling systems, solar systems, floor heating systems, air conditioners and the like.

Alicyclic compounds have a structure where carbon atoms are bonded to one another in a ring. The alicyclic compounds which may be advantageously used for the present invention are those where two members selected from the group consisting of carboxyl and its alkali salts (sodium salt, potassium salt, etc.), ammonium salt and amine salt are bonded to a carbon atom of a ring such as a cycloalkane ring, cycloalkene ring and cycloalkyne ring, or at least two members selected from said group are respectively bonded to as many neighboring carbon atoms.

From among such alicyclic compounds, alicyclic compounds having a ring consisting of 3 to 6 carbon atoms are preferred. They provide excellent buffering. Such alicyclic compounds having a ring consisting of 3 carbon atoms may be advantageously selected from among 1,1-cyclopropane dicarboxylic acid, 1,2-cyclopropane dicarboxylic acid, 1-cyclopropene-1,2-dicarboxylic acid, 2-cyclopropene-1,2-dicarboxylic acid, 3-methyl-1,2-cyclopropane dicarboxylic acid, 1-isobutyl cyclopropane-1,2-dicarboxylic acid, 3-methylene-1,2-cyclopropane dicarboxylic acid, 2-ethynyl-1,1-cyclopropane dicarboxylic acid, 1-amino cyclopropane-1,2-dicarboxylic acid, 1,2,3-cyclopropane tricarboxylic acid, and their mixtures.

From among such alicyclic compounds having a ring consisting of 3 carbon atoms, 1,1-cyclopropane dicarboxylic acid and 1,2,3-cyclopropane tricarboxylic acid are preferred because they are easy to obtain and less costly.

The alicyclic compound having a ring consisting of 4 carbon atoms may be advantageously selected from among 1,1-cyclobutane dicarboxylic acid, 1,2-cyclobutane dicarboxylic acid, 3-methylene cyclobutane-1,2-dicarboxylic acid, 3-methyl-2-cyclobutene-1,2-dicarboxylic acid, 1,2,3,4-cyclobutane tetracarboxylic acid, and their mixtures.

From among such alicyclic compounds having a ring consisting of 4 carbon atoms, 1,1-cyclobutane dicarboxylic acid and 1,2,3,4-cyclobutane tetracarboxylic acid are preferred because they are easy to obtain and less costly.
The alicyclic compounds having a ring consisting of 5 carbon atoms may be advantageously selected from among 1,1-cyclopentane dicarboxylic acid, 1,2-cyclopentane dicarboxylic acid, 1-cyclopentene-1,2-dicarboxylic acid, 3-cyclopentene-1,1-dicarboxylic acid, 3,4-methylene-1,1-cyclopropane dicarboxylic acid, 3-methyl-1,1-cyclopentane dicarboxylic acid, 4-hydroxy-cyclopent-2-ene-1,2-dicarboxylic acid, 3-carboxymethyl-4-methylene cyclopropane-1,1-dicarboxylic acid, 1-aminocyclopentane-1,3,4-tricarboxylic acid and 1,2,3,4-cyclopentane tetracarboxylic acid, and their mixtures.

From among such alicyclic compounds having a ring consisting of 5 carbon atoms, 1,2,3,4-cyclopentane tetracarboxylic acid is preferred because it is easy to obtain and less costly.

The alicyclic compounds having a ring consisting of 6 carbon atoms may be advantageously selected from among 1,1-cyclohexane dicarboxylic acid, 1,2-cyclohexane dicarboxylic acid, 3-methyl-4-cyclohexene-1,2-dicarboxylic acid, 1-cyclohexene-1,2-dicarboxylic acid, 4-cyclohexene-1,2-dicarboxylic acid, 3-methyl-1,2-cyclohexane dicarboxylic acid, 1,4-cyclohexadiene-1,2-dicarboxylic acid, 4-methyl-1,2-cyclohexane dicarboxylic acid, 2-cyclohexene-1,2-dicarboxylic acid, 3-cyclohexene-1,2-dicarboxylic acid, 4-methyl-4-cyclohexene-1,2-dicarboxylic acid, 4-isopropyl-4-cyclohexene-1,2-dicarboxylic acid, 1,2,3-cyclohexane tricarboxylic acid, 1,2,4-chyclohexane tricarboxylic acid, 1,2,3,4-cyclohexane tetracarboxylic acid, 1,2,4,5-cyclohexane tetracarboxylic acid, 1,2,3,4,5,6-cyclohexane hexacarboxylic acid, 5- hydroxy-3,5-dimethyl-1, 2-cyclohexane dicarboxylic acid, bicyclo-2,2,1-5-heptene-2,3-dicarboxylic acid, endo-bicyclo[2,2,2]oct-5-ene-2,3-dicarboxylic acid and their mixtures.

From among such alicyclic compounds having a ring consisting of 6 carbon atoms, 1,2-cyclohexane dicarboxylic acid, 3-methyl-4-cyclohexene-1,2-dicarboxylic acid, 1-cyclohexene-1,2-dicarboxylic acid, 4-cyclohexene-1,2-dicarboxylic acid and 4-methyl-4-cyclohexene-1,2-dicarboxylic acid are preferred because they are easy to obtain and less costly.

The heterocyclic compound may be advantageously selected from among 2-oxotetrahydrofuran-4,5-dicarboxylic acid, 7-oxabicyclo[2,2,1]heptane-2,3-dicyclo carboxylic acid, 2,3-pyrolidine dicarboxylic acid, 3,4-pyrolidinc dicarboxylic acid, 5,6-dimethoxy-5,6-dimethyl-[1,4]dioxane-2,3-dicarboxylic acid, and their mixtures.

From among such heterocyclic compounds, 2-oxotetrahydrofuran-4,5-dicarboxylic acid is preferred because it is easy to obtain and less costly.

It is desirable for such a pH buffering agent to be contained in the heat transfer medium composition within the range of 0.01 mass% to 10 mass% before dilution with water so as to provide excellent buffering in the heat transfer medium. If the content of the pH buffering agent is less than 0.01 mass%, sufficient buffering will not be provided in the heat transfer medium, while if the content of the pH buffering agent exceeds 10 mass%, it is only uneconomical

The heat transfer medium composition according to the present invention may additionally contain at least one corrosion inhibitor in addition to the pH buffering agent. Corrosion inhibitors which can be advantageously used in the composition may be selected from among phosphoric acids and their salts, aliphatic carboxylic acids and their salts, aromatic carboxylic acids and their salts, triazoles, thiazoles, silicate, nitrate, nitrite, borate, molybdate. amines, and their mixtures.

As the phosphates and their salts, orthophosphates, pyrophosphates, hexametaphosphates, tripolyphosphates and their alkali metal salts such as sodium salts and potassium salts may be advantageously used.

As the aliphatic carboxylic acids and their salts, pentanoic acid, hexanoic acid, heptanoic acid, octanoic acid, nonanoic acid, decanoic acid, 2-ethyl hexanoic acid, adipic acid, suberic acid, azelaic acid, sebacic acid, undecanoic acid, dodecanoic diacid and their alkali metal salts such as sodium salts and potassium salts may be advantageously used.

As the aromatic carboxylic acids and their salts, benzoic acid, toluic acid, para tertiary butyl benzoic acid, phthalic acid, para methoxy benzoic acid, cinnamic acid and their alkali metal salts such as sodium salts and potassium salts may be advantageously used.

As the triazoles, benzotriazole, methylbenzotriazole and cyclobenzotriazole, 4-phenyl-1,2,3-triazole may be advantageously used.

As the thiazoles, mercaptobenzothiazole and their alkali metal salts such as sodium salts and potassium salts may be advantageously used.

As the silicate, sodium salt and potassium salt of metasilicate, water solutions of sodium silicate (water glass; represented by Na2O/XSiO2 (X is 0.5 to 3.3) may be advantageously used. As the nitrate, sodium nitrate and potassium nitrate may be advantageously used. As the nitrite, sodium nitrite and potassium nitrite may be advantageously used. As the borate, sodium tetraborate and potassium tetraborate may be advantageously used.

As the molybdate, sodium molybdate, potassium molybdate and ammonium molybdate may be advantageously used. As the amines, monoethanol amine, diethanol amine, triethanol amine, monoisopropanol amine, diisopropanol amine and triisopropanol amine may be advantageously used.

A variety of metals such as aluminum, aluminum alloys, cast iron, steel, brass, solder and copper are used in the cooling system for an internal combustion engine as well as in solar system, floor heating system and air conditioner. It is therefore desirable to combine severed types of corrosion inhibitors in order to effectively inhibit corrosion of all such metals.

An appropriate pH adjustor such as sodium hydroxide or potassium hydroxide, an antifoaming agent or a coloring agent may be added to the heat transfer medium composition of the present invention.

### Effects of the Invention

The heat transfer medium composition of the present invention contains a pH buffering agent, which comprises an alicyclic compound where two members selected from the group consisting of carboxyl and its salts arc bonded to a ring-constituting carbon atom, or at least two members selected from said group are respectively bonded to as many neighboring carbon atoms, or the heat transfer medium contains a pH buffering agent which comprises a heterocyclic compound in which at least one ring-constituting carbon atom of the alicyclic compound is substituted by a nitrogen or oxygen atom, where two members selected from said group are bonded to a ring-constituting carbon atom, or at least two members selected from said group are respectively bonded to as many neighboring carbon atoms. Therefore, the heat transfer medium composition of the present invention is capable of providing long lasting pH maintenance during actual use within the appropriate pH range of 6 to 10.

### Embodiments

In the following, the heat transfer medium compositions according to preferred embodiments of the present invention are described, and the performance (buffering ability) of each of the preferred heat transfer medium compositions is evaluated by comparing the embodiments with comparatives. For evaluation of buffering ability, Embodiments 1 to 6 and Comparatives 1 to 4 whose respective ingredients are given in Table 1 were diluted with pure water to 30 volume%. 100ml samples were used.

Embodiments 1 to 6 each contained water and ethylene glycol as their main ingredients, to which a pH buffering agent was added, and the pH value of each sample was adjusted with potassium hydroxide such that their initial pH value was 10.

Comparatives 1 to 4 each contained water and ethylene glycol as their main ingredients like Embodiments 1 to 6. A benzoic acid where one carboxylic group bonds with one atom in an aromatic ring was added to prepare Comparative 1; a phthalic acid where carboxylic groups respectively bond with two neighboring atoms in an aromatic ring was added to prepare Comparative 2; a cyclohexane carboxylic acid where one carboxylic group bonds with one atom in a ring of an alicyclic compound was added to prepare Comparative 3; and 1,3-cyclohexane dicarboxylic acid where carboxylic groups respectively bond with two atoms in a ring of an alicyclic compound (not neighbors) was added to prepare Comparative 4. The pH value of each of these compositions of Comparatives 1 to 4 was adjusted with potassium hydroxide such that their initial pH value was 10 in the same manner as for Embodiments 1 to 4.

The amount (ml) of hydrochloric acid of 1/10 normal which was required to change the pH value of each sample of Embodiments 1 to 6 and Comparatives 1 to 4 from the initial pH value 10 to pH 6 was measured and evaluated taking into consideration the fact that the buffering ability can be considered high when a large amount of hydrochloric acid is used, and the buffering ability can be considered low when only a small amount of hydrochloric acid is used. The results are shown in Table 2.

**Table 1**

| Component | Embodiment 1 | Embodiment 2 | Embodiment 3 | Embodiment 4 | Embodiment 5 | Embodiment 6 | Comparative 1 | Comparative 2 | Comparative 3 | Comparative 4 |
|---|---|---|---|---|---|---|---|---|---|---|
| Ethylene glycol | Rest | <- | <- | <- | <- | <- | <- | <- | <- | <- |
| Potassium hydroxide | Appropriate amount | <- | <- | <- | <- | <- | <- | <- | <- | <- |
| Water | 2.0 | 2.0 | 2.0 | 2.0 | 2.0 | 2.0 | 2.0 | 2.0 | 2.0 | 2.0 |
| 1,1-cyclopropane dicarboxylic acid | 1.0 | - | - | - | - | - | - | - | - | - |
| 1,2- cyclohexane dicarboxylic acid | - | 1.0 | - | - | - | - | - | - | - | - |
| 4-cyclohexene-1,2-dicarboxylic acid anhydride | - | - | 0.89 | - | - | - | - | - | - | - |
| 4-methyl-1,2-cyclohexane dicarboxylic acid | - | - | - | 1.0 | | | - | - | - | - |
| 1,2,3-cyclopropane tricarboxylic acid | - | - | - | - | 1.0 | - | - | - | - | - |
| 1,2,3,4-cyclopentane tetracarboxylic acid | - | - | - | 0- | - | 1.0 | - | - | - | - |
| Benzoic acid | - | - | - | - | - | -- | 1.0 | - | - | - |
| Phthalic acid | - | - | - | - | - | - | - | 1.0 | - | - |
| Cyclohexane carboxylic acid | - | - | - | - | - | - | - | - | 1.0 | - |
| 1,3-cyclobexane dicarboxylic acid | - | - | - | - | - | - | - | - | - | 1.0 |
| Total | 100 | 100 | 100 | 100 | 100 | 100 | 100 | 100 | 100 | 100 |
| pH value (30 vol %) | 10 | 10 | 10 | 10 | 10 | 10 | 10 | 10 | 10 | 10 |

**Table 2**

| Item | Embodiment 1 | Embodiment 2 | Embodiment 3 | Embodiment 4 | Embodiment 5 | Embodiment 6 | Comparative 1 | Comparative 2 | comparative 3 | Comparative 4 |
|---|---|---|---|---|---|---|---|---|---|---|
| Amount (ml) of hydrochloric acid of 1/10 normal (pH 10 to 6) | 24.5 | 18.8 | 18.2 | 16.6 | 10.9 | 11.5 | 3.4 | 5.4 | 4.0 | 6.5 |

It can be seen from the results shown in Table 2 that the amounts of hydrochloric acid for Embodiments 1 to 6 were as large as 10.9 ml to 24.5 ml, as compared with the amounts of hydrochloric acid for Comparatives 1 to 3, which were 3.4 ml to 5.4 ml. The results are indicative of the excellent buffering ability of Embodiments 1 to 6.

Although an alicyclic hydrocarbon was used in Comparative 4 as in all of Embodiments 1 to 6, this alicyclic compound did not have the structure where two members selected from the group consisting of a carboxylic group and its salts bond with one carbon atom in a ring, or at least two members selected from the group bond with as many neighboring carbon atoms respectively. The amount of hydrochloric acid for this alicyclic compound was as small as 6.5 ml, which is indicative of the poor buffering ability of Comparative 4 as compared with Embodiments 1 to 6.

There was no precipition of the pH buffering agent in the range of pH 6 to 10 in any of the samples of the Embodiments, which is an indication of excellent stability.

The difference in buffering ability between isomers of 1,2-cyclohexane dicarboxylic acid was evaluated by measuring the amounts (ml) of hydrochloric acid required to change the pH value from the initial pH value 10 to pH 6 for cis-1,2-cyclohexane dicarboxylic acid and trans-1,2-cyclohexane dicarboxylic acid. 18.2 ml was used for cis-1,2-cyclohexane dicarboxylic acid and 12.0 ml was used for trans-1,2-cyclohexane dicarboxylic acid, indicating that the cis isomer was superior in buffering ability.

Next, Embodiments 7 and 8 as well as Comparative 5 and 6 whose respective ingredients are given in Table 3 were diluted with pure water to 30 volume% (initial pH value adjusted to 8) and were left for 672 hours at 120 °C, After they were cooled, the pH of each sample was measured. The results are shown in Table 4.

**Table 3**

| Component | Embodiment 7 | Embodiment 8 | Comparative 5 | Comparative 6 |
|---|---|---|---|---|
| Ethylene glycol | Rest | <- | <- | <- |
| Potassium hydroxide | Appropriate amount | <- | <- | <- |
| Water | 2.0 | 2.0 | 2.0 | 2.0 |
| 1,1-cyclopropane dicarboxylic acid | 1.0 | - | - | - |
| 1.2-cyclohexane dicarboxylic acid | - | 1.0 | - | - |
| Benzoic acid | - | - | 1.0 | - |
| Phthalic acid | - | - | - | 1.0 |
| P-tert-butyl benzoic acid | 3.0 | 3.0 | 3.0 | 3.0 |
| Sebacic acid | 1.0 | 1.0 | 1.0 | 1.0 |
| Sodium molybdate | 0.3 | 0.3 | 0.3 | 0.3 |
| Sodium nitrate | 0.3 | 0.3 | 0.3 | 0.3 |
| Phosphoric acid | 0.3 | 0.3 | 0.3 | 0.3 |
| Total | 100 | 100 | 100 | 100 |

**Table 4**

| Item | Embodiment 7 | Embodiment 8 | Comparative 5 | Comparative 6 |
|---|---|---|---|---|
| Initial pH value | 8.0 | 8.0 | 8.0 | 8.0 |
| pH value after test | 7.2 | 7.3 | 6.6 | 6.0 |
| Change in pH value | -0.8 | -0.7 | -1.4 | -2.0 |

It was confirmed from the results shown in Table 4 that the pH values of the samples of Embodiments 7 and 8 changed only slightly by -0.8 and -0.7, respectively as compared to the changes of Comparatives 5 and 6 which were -1.4 and -2.0, respectively. It was confirmed that Embodiments 7 and 8 provide excellent buffering ability.

## Claims

1. A heat transfer medium composition comprising a main ingredient selected from the group consisting of water, glycols, alcohols, glycol ethers, and mixtures thereof, further comprising a pH buffering agent, the pH buffering agent comprising an alicyclic compound where two members selected from the group consisting of carboxyl, its salts, and mixtures thereof are bonded to a ring-constituting carbon atom, or at least two members selected from said group are respectively bonded to as many neighboring carbon atoms, or the pH buffering agent comprising a heterocyclic compound wherein at least one ring-constituting carbon atom of the alicyclic compound is substituted by a nitrogen or oxygen atom, where two members selected from said group are bonded to a ring-constituting carbon atom, or at least two members selected from said group are respectively bonded to as many neighboring carbon atoms.

2. The heat transfer medium composition of Claim 1, wherein the pH buffering agent is an alicyclic compound having a ring consisting of 3 to 6 carbon atoms.

3. The heat transfer medium composition of Claim 2, wherein the alicyclic compound having a ring consisting of 3 carbon atoms is selected from the group consisting of 1,1-cyclopropane dicarboxylic acid, 1,2-cyclopropane dicarboxylic acid, 1-cycloproyene-1,2-dicarboxylic acid, 2-cyclopropene-1,2-dicarboxylic acid, 3-methyl-1,2-cyclopropane dicarboxylic acid, 1-isobutyl cyclopropane-1,2-dicarboxylic acid, 3-methylene-1,2-cyclopropane dicarboxylic acid, 2-ethynyl-1,1-cyclopropane dicarboxylic acid, 1-amino cyclopropane-1,2-dicarboxylic acid, 1,2,3-cyclopropane tricarboxylic acid, salts thereof, and mixtures thereof.

4. The heat transfer medium composition of Claim 2, wherein the alicyclic compound having a ring consisting of 4 carbon atoms is selected from the group consisting of 1,1-cyclobutane dicarboxylic acid, 1,2-cyclobutane dicarboxylic acid, 3-methylene cyclobutane-1,2-dicarboxylic acid, 3-methyl-2-cyclobutene-1,2-dicarboxylic acid, 1,2,3,4-cyclobutane tetracarboxylic acid, salts thereof, and mixtures thereof.

5. The heat transfer medium composition of Claim 2, wherein the alicyclic compound having a ring consisting of carbon 5 atoms is selected from the group consisting of 1,1-cyclopentane dicarboxylic acid, 1,2-cyclopcntane dicarboxylic acid, 1-cyclopentene-1,2-dicarboxylic acid, 3-cyclopentane-1,1-dicarboxylic acid, 3,4-methylene-1,1-cyclopropane dicarboxylic acid, 3-methyl-1,1-cyclopentane dicarboxylic acid, 4-hydroxy-cyclopent-2-ene-1,2-dicarboxylic acid, 3-carboxymethyl-4-methylene cyclopropane-1,1-dicarboxylic acid, 1-aminocyclopentane-1,3,4-tricarboxylic acid, 1,2,3,4-cyclopentane tetracarboxylic acid, salts thereof, and mixtures thereof.

6. The heat transfer medium composition of Claim 2, wherein the alicyclic compound having a ring consisting of 6 carbon atoms is selected from the group consisting of 1,1-cyclohexane dicarboxylic acid, 1,2-cyclohexane dicarboxylic acid, 3-methyl-4-cyclohexene-1,2-dicarboxylic acid, 1-cyclohexene-1,2-dicarboxylic acid, 4-cyclohexene-1,2-dicarboxylic acid, 3-methyl-1,2-cyclohexane dicarboxylic acid, 1,4-cyclohexadiene-1,2-dicarboxylic acid, 4-methyl-1,2-cyclohexane dicarboxylic acid, 2-cyclohexene-1,2-dicarboxylic acid, 3-cyclohexene-1,2-dicarboxylic acid, 4-methyl-4-cyclohexene-1,2-dicarboxylic acid, 4-isopropyl-4-cyclohexene-1,2-dicarboxylic acid, 1,2,3-cyclohexane tricarboxylic acid, 1,2,4-chyclohexane tricarboxylic acid, 1,2,3,4-cyclohexane tetracarboxylic acid, 1,2,4,5-cyclohexane tetracarboxylic acid, 1,2,3,4,5,6-cyclohexane hexacarboxylic acid, 5-hydroxy-3,5-dimethyl-1,2-cyclohexane dicarboxylic acid, bicyclo-2,2,1-5-heptene-2,3-dicarboxylic acid, endo-bicyclo[2,2,2]oct-5-ene-2,3-dicarboxylic acid, salts thereof, and mixtures thereof.

7. The heat transfer medium composition of Claim 1, wherein the heterocyclic compound is selected from the group consisting of 2-oxotetrahydrofuran-4,5-dicarboxylic acid, 7-oxabicyclo[2,2,1]heptane-2,3-dicyclo carboxylic acid, 2,3-pyrolidine dicarboxylic acid, 3,4-pyrolidine dicarboxylic acid, 5,6-dimethoxy-5,6-dimethyl-[1,4]dioxane-2,3-dicarboxylic acid, salts thereof, and mixtures thereof.

8. The heat transfer medium composition of Claim 1, wherein the pH buffering agent is contained 0.01 mass% to 10 mass%

9. The heat transfer medium composition of any of Claims 1 to 8, containing at least one corrosion inhibitor.
